# EUROPEAN PATENT APPLICATION

(11) **EP 4 811 633 A1**
(43) Date of publication of application: **23.09.2026**
(21) Application number: 26163367.1
(22) Date of filing: 09.03.2026
(51) Int. Cl.: H02M 1/12, H02M 1/00

(54) **COMMON-MODE VOLTAGE CANCELLATION CIRCUIT**

(30) Priority: 13.03.2025 US 202519078841
(71) Applicant: GE Aviation Systems LLC, Grand Rapids, MI 49512 (US)
(72) Inventor: XIE, Ren, Niskayuna, 12309-1027 (US); LI, Cong, Niskayuna, 12309-1027 (US); MUELLER, Frank Jakob John, Niskayuna, 12309-1027 (US)
(74) Representative: Openshaw & Co.

(57) **Abstract**

A common-mode voltage cancellation (CMVC) circuit and method of forming is disclosed. The CMVC circuit (130), (230), (330), (430), (530), (630) includes a set of input lines (113) configured to receive a respective input phase voltage (VA1), (VB1), (VC1), each respective input phase voltage (VA1), (VB1), (VC1) including a common-mode voltage component (Vcm), and a set of output lines (114) configured to provide a respective output phase voltage (VA3), (VB3), (VC3). The CMVC circuit (130), (230), (330), (430), (530), (630) also includes a set of first capacitors (250) electrically coupled between a respective input line (113) and a node (231), and a coupled inductor (220), having a primary winding (221) and at least one secondary winding (222a), (222b), (222c), the at least one secondary winding (222a), (222b), (222c) electrically coupled in series between a respective input line (113) and a respective output line (114). A first resistor (261) and the primary winding (221) are electrically coupled in series between the node (231) and an electrical ground (202).

## Description

### TECHNICAL FIELD

This disclosure relates to filters for electrical circuits, and more particularly, to a filter circuit for reducing a common-mode voltage provided to an electrical load.

### BACKGROUND

High-speed switching devices, such as metal-oxide-semiconductor field-effect transistors (MOSFETs) and insulated-gate bipolar transistors (IGBTs), have enabled increased switching frequencies for power converters such as pulse width modulated (PWM) inverters and direct current-direct current (DC-DC) converters. One drawback of the increased switching frequencies is that a high-frequency oscillatory common-mode voltage and differential-mode voltage is produced at an output terminal of the power converters when the switching devices change state (e.g., from a conducting state to a non-conducting state). These high-frequency common-mode voltages and currents due to switching in power converters and inverters introduces numerous well-known problems in electrical systems.

### BRIEF DESCRIPTION OF THE DRAWINGS

A full and enabling disclosure of the present description, including the best mode thereof, directed to one of ordinary skill in the art, is set forth in the specification, which refers to the appended FIGS., in which:
FIG. 1 illustrates a schematic view of a power circuit in accordance with various aspects described herein.
FIG. 2 is a schematic view of a common-mode voltage cancellation circuit in accordance with various aspects described herein.
FIG. 3 is a schematic view of another aspect of a common-mode voltage cancellation circuit in accordance with various aspects described herein.
FIG. 4 is a schematic view of yet another aspect of a common-mode voltage cancellation circuit in accordance with various aspects described herein.
FIG. 5 is a schematic view of yet another aspect of a common-mode voltage cancellation circuit in accordance with various aspects described herein.
FIG. 6 is a schematic view of yet another aspect of a common-mode voltage cancellation circuit in accordance with various aspects described herein.
FIG. 7 is a flow diagram of a method of forming a common-mode voltage cancellation circuit in accordance with various aspects described herein.

### DETAILED DESCRIPTION

Aspects of the disclosure can be implemented in any environment, apparatus, or method for reducing a common-mode voltage in a circuit regardless of the function performed by the circuit.

As used herein, the term "set" or a "set" of elements can be any number of elements, including only one.

As used herein, the terms "first", "second", and "third" may be used interchangeably to distinguish one component or element from another and are not intended to signify location, order, hierarchy, or importance of the individual elements. Additionally, a description of a "first" element in an aspect is not necessarily intended to infer the presence of a "second" element in that aspect.

Additionally, as used herein, the term "upstream" refers to a direction that is opposite a fluid or a power flow direction, and the term "downstream" refers to a direction that is in the same direction as the fluid or power flow. For example, with respect to a device having an input side and an output side, the term "upstream" refers to a direction toward the input side, and the term "downstream" refers to a direction toward the output side. Additionally, while terms such as "voltage", "current", and "power" can be used herein, it will be evident to one skilled in the art that these terms can be interrelated when describing aspects of the electrical circuit, or circuit operations.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured to provide, enable, disable, or the like, an electrical connection between respective elements. Non-limiting example power distribution bus connections or disconnections can be enabled or operated by way of switching, bus tie logic, or any other connectors configured to enable or disable the energizing of electrical loads downstream of the bus. Additionally, as used herein, "electrical connection" or "electrically coupled" can include a wired or wireless connection.

As used herein, the term "node" refers to a point in an electrical circuit where two or more circuit elements electrically connect.

The exemplary drawings are for purposes of illustration only and the dimensions, positions, order and relative sizes reflected in the drawings attached hereto can vary.

Approximating language, may be used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or circuits. In at least some instances, the approximating language may correspond to the precision of an instrument for measuring the value, or the precision of the methods or machines for constructing or manufacturing the components and/or circuits. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

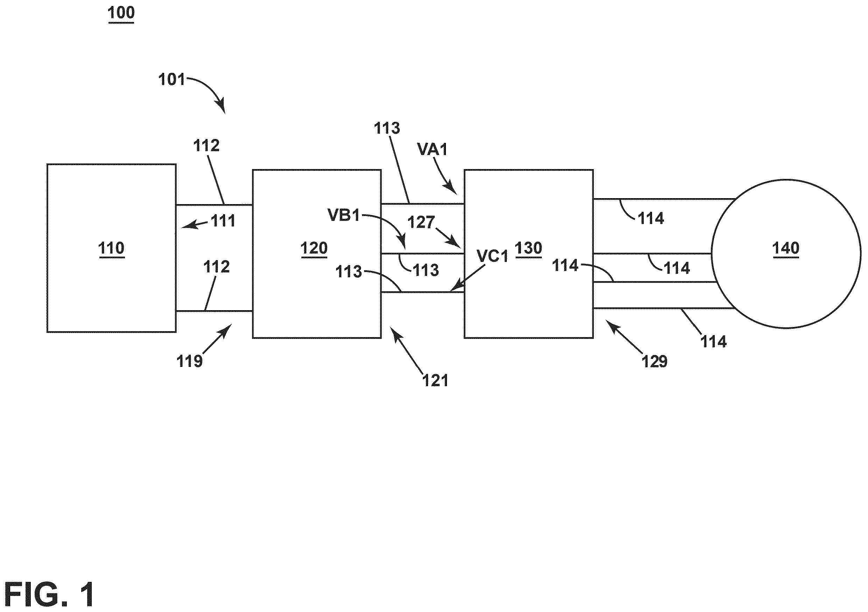

With reference to FIG. 1, an aspect of a power distribution circuit 100 is depicted in block diagram form. The power distribution circuit 100 can include at least one power supply 101 electrically coupled to an electrical load 140. The power supply 101 can comprise a power source 110 having a power source output 111, an inverter 120, having an inverter input 119 and an inverter output 121, and a common mode voltage cancellation (CMVC) circuit 130 having a CMVC circuit input 127 and a CMVC circuit output 129. The power source output 111 can be electrically coupled to the inverter input 119 by way of lines 112. The inverter output 121 can be electrically coupled to the CMVC circuit input 127 of the CMVC circuit 130, via a set of or input lines 113. The CMVC circuit output 129 (e.g., a voltage) can be connected with the electrical load 140 via a set of or output lines 114 such as bus bars or cables, to provide electrical power thereto. In an aspect, each output line 114 is coupled electrically in series with a corresponding input line 113. In an aspect, the power supply 101 can comprise for example, the power source 110 as a conventional DC power source, including but not limited to, a battery, photovoltaic panel, DC power supply, any other known source of DC electrical power, or a combination thereof. The DC power from the power source 110 can be provided to the lines 112, which delivers the electrical power to the electrical load 140, electrically coupled to the power supply 101. In other aspects, the power supply 101 can comprise the power source 110 as a conventional alternating current (AC) power source, such as a generator, or the like.

In one non-limiting example, the electrical DC output of the power source 110 can be provided via the lines 112, to the inverter input 119. The inverter 120 can include any power inverter adapted or configured to invert DC electrical power received at the inverter input 119 to AC electrical power. The AC electrical power is then provided at the inverter output 121 and transmitted therefrom via the input lines 113 to the CMVC circuit input 127. For example, in an aspect, the inverter 120 can provide a polyphase AC voltage. In non-limiting aspects, the polyphase AC voltage can comprise a three-phase AC voltage, wherein each conductor provides a respective input phase voltage (hereinafter, designated first phase voltages VA1, VB1, VC1, VD1, respectively) at the inverter output 121 to a respective input line 113, which in turn can provide the respective first phase voltage VA1, VB1, VC1 received from inverter 120 to the CMVC circuit 130. The CMVC circuit input 127 is coupled to the inverter output 121 via the input lines 113 to receive the first phase voltage VA1, VB1, VC1, therefrom. In various aspects, each input line 113 can correspond to a respective AC phase voltage of the inverter output 121.

The CMVC circuit 130 is electrically coupled to the inverter 120 to receive AC electrical power from the inverter output 121, at the CMVC circuit input 127, via electrical conductors such as the input lines 113. For example, AC electrical power can be provided to the CMVC circuit 130 as a conventional polyphase AC mode voltage (e.g., phases denoted VA1, VB1, VC1, and VD1), with respect to ground (GND) or neutral, and having any fundamental frequency (e.g., the lowest frequency component of the AC voltage) . The respective first phase voltages VA1, VB1, VC1, VD1 provided by the inverter 120 can additionally include a respective common-mode voltage component in phase with the respective first phase voltages VA1, VB1, VC1, VD1.

In a conventional polyphase AC system (e.g., a three-phase AC system), such a common-mode voltage component at the output of an inverter typically comprises a voltage difference between the power source and ground or the neutral point of the polyphase load having a frequency higher than the fundamental frequency of the phase voltages VA1, VB1, VC1, VD1. More specifically, conventional power supplies and inverters typically have an output phase voltage component with a low fundamental frequency (e.g., 400 Hertz) and a common-mode voltage component having a high-frequency component (e.g., 20 kilohertz), for example due to the high-speed switching operation of the inverter switches. The common-mode voltage component can appear on each line of the conventional multi-line circuit, in-phase with the respective phase voltage, and having a higher frequency than the fundamental frequency of the phase voltage.

Conventional techniques to filter out the common-mode voltage component can include filters that employ relatively large or bulky transformers and capacitors arranged as an inductor-capacitor (LC) filter. Aspects as described herein provide a common-mode voltage cancellation circuit that beneficially employs a simple coupled inductor having a single primary winding with at least one secondary winding to beneficially reduce the size and cost of the inductive filter elements, and to simplify the fabrication of the inductor portion of the filter. In some aspects, the common-mode voltage cancellation circuit can further include a capacitor to filter out a fundamental frequency component, and to improve noise attenuation even further.

Referring again to FIG. 1, each input or first phase voltage VA1, VB1, VC1, VD1, including the respective common-mode voltage component, can be provided to the CMVC circuit 130 on separate respective input lines 113. It will be understood that while the figures depict the CMVC circuit 130 as receiving a conventional polyphase AC voltage VA1, VB1, VC1, VD1 from the inverter 120 via four input lines 113 (e.g., one respective input line 113 per phase or neutral), aspects of the disclosure are not so limited. It is contemplated that aspects of the CMVC circuit 130 can comprise any number of AC or DC voltage inputs, receivable at the CMVC circuit input 127, and having any number of phase and frequency orientations, on any number of input lines 113, with or without a neutral, without departing from aspects of the disclosure described herein.

The illustrated aspect of FIG. 1 is only one non-limiting example of a power distribution circuit 100, and many other possible aspects, configurations, or the like, in addition to that shown are contemplated by aspects of the present disclosure. It will be understood that while aspects of the disclosure are shown, for ease of understanding, in the simple arrangement shown in FIG. 1, depicting a single power source 110, the disclosure is not so limited and has general application to electrical power systems or power distribution circuits 100 having any number of power sources.

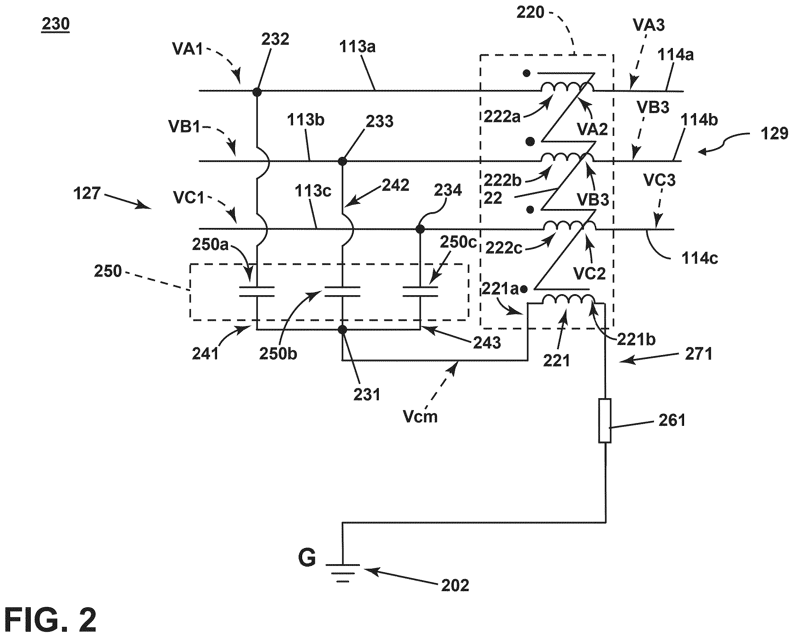

With reference to FIG. 2, a non-limiting aspect of a CMVC circuit 230 is depicted in schematic form. The CMVC circuit 230 can include the CMVC circuit input 127 and the CMVC circuit output 129, the set of input lines 113 (depicted as a first input line 113a, a second input line 113b, and a third input line 113c) and the set of output lines 114 (depicted a first output line 114a, a second output line 114b, and a third output line 114c). The CMVC circuit input 127 can be coupled to an inverter output 121 (FIG. 1) via the input lines 113a, 113b, 113c to receive the input or first phase voltages, VA1, VB1, VC1, respectively, therefrom. In various aspects, each input line 113a, 113b, 113c can correspond to a respective AC phase voltage. A respective third or output phase voltage VA3, VB3, VC3, can be defined at a respective output line 114a, 114b, 114c.

The CMVC circuit 230 can further include a set of first capacitors 250, a first node 231, a first resistor 261, and a coupled inductor 220. The coupled inductor 220 can include a primary winding 221 and at least one secondary winding, illustrated as a first secondary winding 222a, a second secondary winding 222b, and a third secondary winding 222c. It will be appreciated that the primary winding 221 and the at least one secondary winding 222a, 222b, 222c can be wound on a common magnetic core 226 to define the coupled inductor 220.

Each capacitor of the set of first capacitors 250 is electrically coupled in series between a respective input line 113a, 113b, 113c, and the first node 231. For example, each capacitor of the set of first capacitors 250 can be electrically coupled at a respective first end to a respective input line 113a, 113b, 113c, and electrically coupled at a second end together to define the first node 231. In non-limiting aspects, the set of first capacitors 250 can include a respective first capacitor 250a, 250b, 250c corresponding to each respective input line 113a, 113b, 113c. For example, a respective first capacitor 250a can be electrically coupled at a second node 232 to the first input line 113a, and electrically in series between the first input line 113a and the first node 231, another respective first capacitor 250b can be electrically coupled at a third node 233 to the second input line 113b, and in series between the second input line 113b and the first node 231, and another first capacitor 250c can be electrically coupled at a fourth node 234 to the third input line 113c, and in series between the third input line 113c and the first node 231.

The first resistor 261 and the primary winding 221 are electrically coupled in series between the first node 231 and an electrical ground 202 to define a first branch 271. For example, as depicted, the primary winding 221 can have a first end 221a (e.g., an upstream end) and an opposing second end 221b (e.g., a downstream end). The first end 221a can be electrically coupled to the first node 231, and the second end 221b can be electrically coupled to the first resistor 261. The first resistor 261 can be electrically coupled to the electrical ground 202. The primary winding 221 is magnetically coupled to the at least one secondary winding 222a, 222b, 222c.

The at least one secondary winding 222a, 222b, 222c can be coupled electrically in series between a respective input line 113a, 113b, 113c and respective output line 114a, 114b, 114c. For example, the secondary windings 222a, 222b, 222c can be electrically coupled at a respective upstream end to a respective input line 113a, 113b, 113c, and electrically coupled at a respective downstream end to a respective output line 114a, 114b, 114c.

While FIG. 2 depicts an aspect with the coupled inductor 220 having three secondary windings 222a, 222b, 222c, other aspects are not so limited. It is contemplated that the coupled inductor 220 can include any number of secondary windings. For example, in some aspects, the number of secondary windings in the coupled inductor 220 can correspond to the number of input lines 113a, 113b, 113c.

Accordingly, since each respective input line 113a, 113b, 113c, can be electrically coupled to ground via the respective first capacitor 250a, 250b, 250c, the first resistor 261, and the primary winding 221, the CMVC circuit 230 can define a first series resonant circuit 241, a second series resonant circuit 242, and a third series resonant circuit 243.

For example, the first series resonant circuit 241 can extend in series from the first input line 113a at the second node 232 to the respective first capacitor 250a to the first node 231 to the primary winding 221, to the first resistor 261, and to the electrical ground 202. The second series resonant circuit 242 can extend in series from the second input line 113b at the third node 233 to the respective first capacitor 250b to the first node 231 to the primary winding 221, to the first resistor 261, and to the electrical ground 202. The third series resonant circuit 243 can extend in series from the third input line 113c at the fourth node 234 to the respective first capacitor 250c to the first node 231 to the primary winding 221, to the first resistor 261, and to the electrical ground 202. As such, while each of the first, second, and third series resonant circuits 241, 242, 243 include a respective first capacitor 250a, 250b, 250c, they can each share a common inductor (e.g., the primary winding 221) and a common resistor (e.g., the first resistor 261).

It will be understood that a sinusoidal AC voltage (e.g., a primary voltage) applied to a coil (e.g., a coupled inductor primary winding) will induce a voltage (e.g., a secondary voltage) in a second coil (e.g., a coupled inductor secondary winding) where the two are linked by a magnetic path (e.g., the coupled inductor magnetic core). The phase relationship of the two sinusoidal AC voltages (e.g., the primary and secondary voltages) will depend upon the relative polarity of the respective coils (e.g., the primary and secondary windings), and can be arranged to be either in-phase with each other or can be displaced by 180 degrees. For example, as described herein, a "first polarity" winding matching with a second "first polarity" winding can be arranged such that the phase relationship of the two sinusoidal AC voltages at the primary and secondary voltages are in-phase with each other. The magnitude of the induced secondary voltage will depend on the turns or winding ratio of the primary winding to the secondary winding.

For ease of understanding, as shown in the drawings, a conventional "dot" depicted adjacent to a conventional coupled inductor winding symbol is used to indicate the polarity of a given winding. As will be understood, the term "polarity" refers to the relative direction of the induced voltages between the primary and secondary windings at any given moment in the AC cycle, and the voltage drop from polarity to non-polarity across one winding is substantially in phase with the voltage drop from polarity to non-polarity across the other winding(s). For example, as illustrated in FIG 2, the primary winding 221 is illustrated as being wound having the same polarity as the at least one secondary winding 222a, 222b, 222c. A positive voltage in the dotted terminal of one winding (e.g. the primary winding 221) induces a positive voltage at the dotted terminal of the other respective winding (e.g., the at least one secondary winding 222a, 222b, 222c).

While FIG. 2 depicts an aspect of the CMVC circuit 230 having three input lines 113a, 113b, 113c at the CMVC circuit input 127 of the CMVC circuit 230, other aspects are not so limited. It is contemplated that other non-limiting aspects of the CMVC circuit 230 can include any number of AC or DC voltage inputs, receivable by the CMVC circuit 230, and having any number of phase and frequency orientations, on any number of input lines 113a, 113b, 113c, without departing from the scope of the disclosure herein. For example, in aspects the CMVC circuit 230 can be a polyphase AC circuit having a number of electrical phases, wherein the at least one secondary winding 222a, 222b, 222c comprises at least N secondary windings 222a, 222b, 222c, where N is equal to the number of electrical phases in the CMVC circuit 230.

Additionally, while FIG. 2 depicts an aspect with the set of first capacitors 250 having three first capacitors 250a, 250b, 250c, other aspects are not so limited. In other aspects, the set of first capacitors 250 can include any number of capacitors. For example, in some aspects, the number of capacitors in the set of first capacitors 250 can correspond to the number of input lines 113a, 113b, 113c.

For ease of understanding and brevity of description, the aspect depicted in FIG. 2 is described herein with the coupled inductor 220 having a primary winding to secondary winding ratio of 1:1. It is contemplated that in other aspects, the coupled inductor 220 can have any primary winding to secondary winding ratio without departing from the scope of the disclosure. For example, in an aspect, the coupled inductor 220 can have a winding ratio substantially equal to T:1, wherein T is greater than 1.

In operation, the CMVC circuit 230 can receive the respective first phase voltage VA1, VB1, VC1 (e.g., from the inverter 120 shown in FIG. 1) at the CMVC circuit input 127 via the first input line 113a, second input line 113b, and third input line 113c, respectively. When received by the CMVC circuit 230, the respective first phase voltage VA1, VB1, VC1 can comprise a respective low-frequency component (e.g., a fundamental frequency), and a respective common-mode voltage component (hereinafter, Vcm) having a respective frequency (e.g., a high frequency) that is higher than the fundamental frequency.

The input lines 113a, 113b, 113c can provide the respective first phase voltages VA1, VB1, VC1, having the common-mode voltage component Vcm, to the respective secondary windings 222a, 222b, 222c of the coupled inductor 220. The input lines 113a, 113b, 113c can additionally provide the respective first phase voltages VA1, VB1, VC1 having the common-mode voltage component Vcm, to the first series resonant circuit 241, the second series resonant circuit 242, and the third series resonant circuit 243, respectively, via the second node 232, the third node 233, and the fourth node 234. and thereby to the respective first capacitor 250a, 250b, 250c, and across the primary winding 221 and first resistor 261. When the respective first phase voltage VA1, VB1, VC1, is provided to the primary winding 221, a resultant respective second phase voltage VA2, VB2, VC2, is induced across the corresponding secondary windings 222a, 222b, 222c.

A capacitive reactance (designated herein, "XC") can be associated with each respective first capacitor 250a, 250b, 250c arranged in the respective series resonant circuits 241, 242, 243, which can be represented by the equation: XC = $\frac{1}{2 π f C}$, wherein "*f*" is the frequency of the voltage, and "C" is the capacitance of the respective first capacitor 250a, 250b, 250c. When the frequency of the respective phase voltage VA1, VB1, VC1 is relatively low, for example at the fundamental frequency of the phase voltage VA1, VB1, VC1 (e.g., 400Hz), the capacitive reactance XC of each respective first capacitor 250a, 250b, 250c will be relatively high, due to the low frequency of the phase voltage VA1, VB1, VC1. In this way, at relatively low fundamental frequencies of the phase voltage VA1, VB1, VC1, the respective first capacitor 250a, 250b, 250c of each series resonant circuit 241, 242, 243 has a relatively high capacitive reactance XC, and can be considered to essentially act as an open circuit, thereby preventing the low frequency component of the phase voltage VA1, VB1, VC1 from being provided to the primary winding 221, of the respective series resonant circuit 241, 242, 243. It will be further appreciated that for relatively high frequency voltage component, for example the high-frequency (e.g., 20KHz) common-mode voltage component Vcm, the capacitive reactance XC of each respective first capacitor 250a, 250b, 250c is relatively low, due to the high frequency of the common-mode voltage component Vcm. In this way, at relatively high frequencies, the first capacitor 250a, 250b, 250c of each respective series resonant circuit 241, 242, 243 can essentially act as a short-circuit, thereby enabling the common-mode voltage component Vcm to be applied or provided to the primary winding 221 of the respective series resonant circuit 241, 242, 243.

In operation, the secondary windings 222a, 222b, 222c can be coupled at a respective downstream end to a respective output line 114a, 114b, 114c and can receive the respective first phase voltage VA1, VB1, VC1 from the input lines 113a, 113b, 113c, and further receive the induced respective second phase voltage VA2, VB2, VC2 from the primary winding 221. When the secondary windings 222a, 222b, 222c receive the respective first phase voltage VA1, VB1, VC1 from the input lines 113a, 113b, 113c, and further receive the induced respective second phase voltage VA2, VB2, VC2 from the primary winding 221, the output phase voltage VA3, VB3, VC3, can be defined at a downstream end of the secondary windings 222a, 222b, 222c. When the respective first phase voltage VA1, VB1, VC1, (including the respective common-mode component Vcm) is provided to the primary winding 221, the resultant respective second phase voltage VA2, VB2, VC2, induced across the corresponding secondary windings 222a, 222b, 222c can be proportional to the respective high-frequency common-mode voltage component Vcm, due to the low-frequency voltage blocking effect of the respective first capacitor 250a, 250b, 250c of the first, second, and third series resonant circuit 241, 242, 243. The respective second phase voltage VA2, VB2, VC2 will essentially cancel the high-frequency common-mode component of the first phase voltage VA1, VB1, VC1, and the respective resultant output phase voltage VA3, VB3, VC3, (e.g., downstream from the coupled inductor 220), will be equal to a difference between the respective first phase voltage VA1, VB1, VC1 and the respective second phase voltage VA2, VB2, VC2 (e.g., VA3=VA1-VA2; VB3=VB1-VB2; and VC3=VC1-VC2). The output phase voltage VA3, VB3, VC3 can thus be essentially equal to the respective first phase voltage VA1, VB1, VC1 with the common-mode voltage component Vcm, suppressed, cancelled, subtracted or otherwise reduced therefrom. In this way, the CMVC circuit 230 can decrease the respective common mode current by voltage cancelling rather than increasing the impedance via costly inductors.

The respective output phase voltage VA3, VB3, VC3, can then be provided downstream from the corresponding secondary windings 222a, 222b, 222c, for example to the electrical load 140 (FIG. 1), via respective output lines 114a, 114b, 114c. For example, in an aspect, the "clean" respective output phase voltage VA3, VB3, VC3, can be provided via the output lines 114a, 114b, 114c to an additional circuitry such as a conventional Inductor-Capacitor (LC) filter (not shown), or to the electrical load 140 (FIG. 1). A magnitude of the output phase voltage VA3, VB3, VC3 can depend on the turns or winding ratio of the primary windings 221 to the respective secondary windings 222a, 222b, 222c. In various other aspects, the coupled inductor 220 may comprise any turns ratio without departing from the scope of the aspects herein.

Additionally, for each series resonant circuit 241, 242, 243, a resonant frequency can be defined as the frequency at which the capacitive reactance XC is equal to the inductive reactance XL (e.g., XC =XL). At the resonant frequency, the capacitive reactance XC will be equal to and opposite the inductive reactance XL, such that the capacitive reactance XC and the inductive reactance XL will essentially cancel each other, thereby making the series-connected inductors (e.g., the primary winding 221) and respective first capacitor 250a, 250b, 250c cooperate to essentially act as a short-circuit with the only opposition to current flow in the respective series resonant circuit 241, 242, 243 effectively being the resistance of the first resistor 261. In an aspect, each respective first capacitor 250a, 250b, 250c, primary winding 221 and the first resistor 261 are configured to define the respective series resonant circuits 241, 242, 243 having substantially zero reactance (e.g., having no opposition to AC current flow) at the resonant frequency of the respective first phase voltage VA1, VB1, VC1. Accordingly, in non-limiting aspects, each respective first capacitor 250a, 250b, 250c, the first resistor 261, and the primary winding 221 of each respective series resonant circuit 241, 242, 243 are further configured to absorb a respective current at the resonant frequency of the respective first phase voltage VA1, VB1, VC1.

Additionally, while FIG. 2 depicts the CMVC circuit 230 including a respective series resonant circuit 241, 242, 243 having a common resistance element defined by the first resistor 261, other aspects are not so limited, and it is contemplated that the respective first, second, and third series resonant circuits 241, 242, 243 can include other passive components arranged to tune, or configure a resonant response.

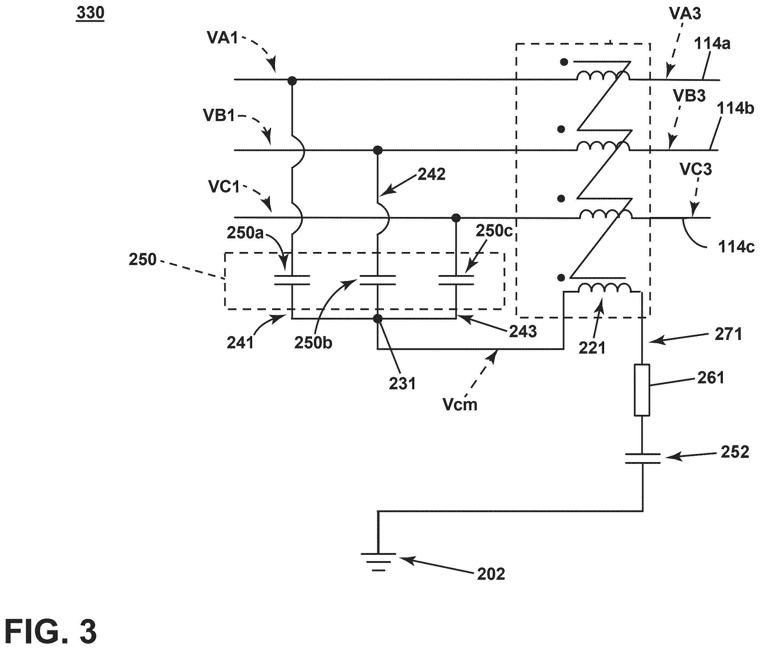

FIG. 3 depicts another non-limiting aspect of a CMVC circuit 330. The CMVC circuit 330 of FIG. 3 is similar to the CMVC circuit 230 of FIG. 2, so like parts are labeled with like reference numbers. One notable difference between the CMVC circuit 330 of FIG. 3 and the CMVC circuit 230 of FIG. 2 is that the CMVC circuit 330 of FIG. 3 includes a second capacitor 252 electrically coupled in series with the primary winding 221 and the first resistor 261 on the first branch 271. As such, each of the first second, and third series resonant circuits 241, 242, 243 include a respective first capacitor 250a, 250b, 250c electrically coupled in series with a common inductor, namely the primary winding 221, a common resistor, namely the first resistor 261, and a common capacitor, namely the second capacitor 252. The second capacitor 252 can advantageously avoid core saturation of the coupled inductor 220, by absorbing the low frequency common-mode component of the phase voltage VA1, VB1, VC1. In this way, smaller and less costly inductors can be implemented for the coupled inductor 220 than would otherwise be utilized, for example in the absence of the primary winding 221, first resistor 261, and the second capacitor 252.

In such an aspect, the respective values of each respective first capacitor 250a, 250b, 250c of the set of first capacitors 250, the second capacitor 252, the first resistor 261, and the primary winding 221 can be selected such that the respective first second, and third series resonant circuits 241, 242, 243 each have substantially zero reactance (e.g., having no opposition to AC current flow) at the resonant frequency of the respective first phase voltage VA1, VB1, VC1. Accordingly, in non-limiting aspects, each respective first capacitor 250a, 250b, 250c, of the set of first capacitors 250, the second capacitor 252, the first resistor 261, and primary winding 221 are further configured to absorb a respective current at the resonant frequency of the respective first phase voltage VA1, VB1, VC1.

In operation, at the respective resonant frequency for each series resonant circuit 241, 242, 243, the primary winding 221 cooperates with the first resistor 261 and the respective first capacitor 250a, 250b, 250c of the set of first capacitors 250 to essentially act as a short-circuit with the only opposition to current flow in the respective series resonant circuit 241, 242, 243 effectively being the resistance of the first resistor 261. The output phase voltage VA3, VB3, VC3 on the respective output lines 114a, 114b, 114c can be essentially equal to the respective first phase voltage VA1, VB1, VC1 with the common-mode voltage component Vcm, suppressed, cancelled, subtracted or otherwise reduced therefrom.

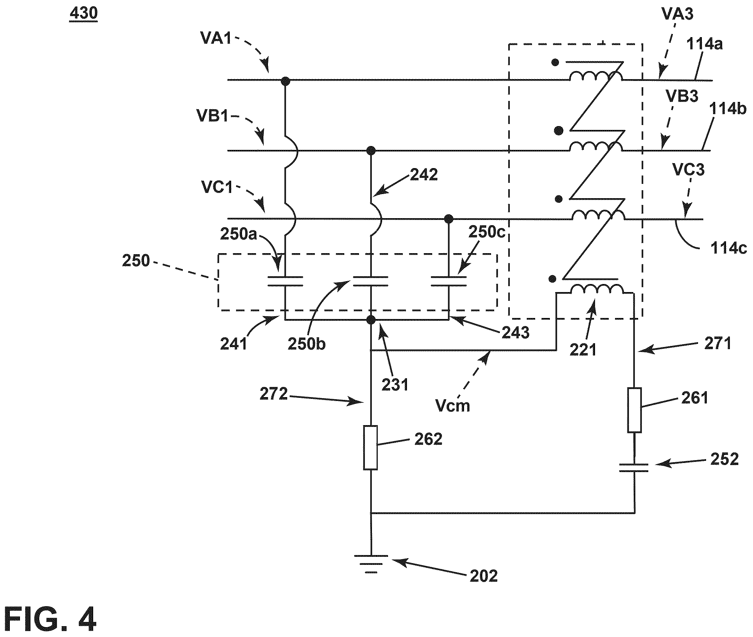

FIG. 4 depicts another non-limiting aspect of a CMVC circuit 430. The CMVC circuit 430 of FIG. 4 is similar to the CMVC circuit 330 of FIG. 3, so like parts are labeled with like reference numbers. One notable difference between the CMVC circuit 430 of FIG. 4 and the CMVC circuit 330 of FIG. 3 is that the CMVC circuit 430 of FIG. 4 includes a second branch 272 defined between the first node 231 and electrical ground 202, and in parallel with the first branch 271. As illustrated, the second branch 272 can include a second resistor 262. The second resistor 262 can be electrically coupled between the first node 231 and the electrical ground 202, and electrically in parallel with the primary winding 221, the first resistor 261 and second capacitor.

The second resistor 262 can be coupled electrically in parallel with the coupled inductor 220 between the first node 231 and the electrical ground 202, and thus be electrically isolated or independent from the output lines 114a, 114b, 114c and the output phase voltage VA3, VB3, VC3. A resistance value (e.g., in ohms) of the second resistor 262 can selected to suppress or dampen a peak resonant frequency of the CMVC circuit 330.

The output phase voltage VA3, VB3, VC3 on the respective output lines 114a, 114b, 114c can be essentially equal to the respective first phase voltage VA1, VB1, VC1 with the common-mode voltage component Vcm, suppressed, cancelled, subtracted or otherwise reduced therefrom.

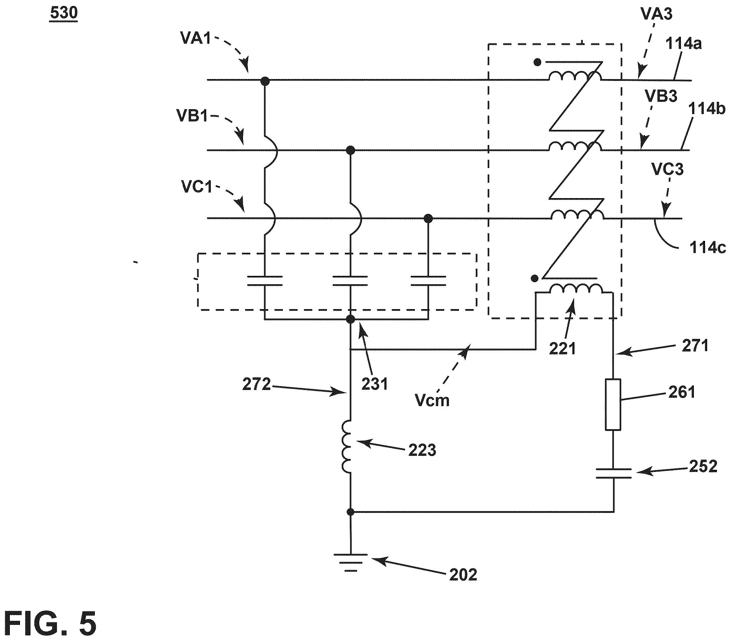

FIG. 5 depicts another non-limiting aspect of a CMVC circuit 530. The CMVC circuit 530 of FIG. 5 is similar to the CMVC circuit 430 of FIG. 4, so like parts are labeled with like reference numbers. One notable difference between the CMVC circuit 530 of FIG. 5 and the CMVC circuit 430 of FIG. 4 is that while the CMVC circuit 530 of FIG. 5 includes the second branch 272 between the first node 231 and electrical ground 202, and in parallel with the first branch 271, the second branch 272 can include a third inductor 223 in lieu of the second resistor 262 (FIG. 4). The third inductor 223 can be electrically coupled between the first node 231 and the electrical ground 202, and electrically in parallel with the primary winding 221, the first resistor 261 and second capacitor 252. In other non-limiting aspects, the third inductor 223 can be arranged electrically in series with the second resistor 262 (FIG. 4), without departing from the scope of the disclosure herein. In operation, the third inductor 223 in the second branch 272 can absorb the high frequency common-mode component Vcm. The output phase voltage VA3, VB3, VC3 on the respective output lines 114a, 114b, 114c can be essentially equal to the respective first phase voltage VA1, VB1, VC1 with the common-mode voltage component Vcm, suppressed, cancelled, subtracted or otherwise reduced therefrom.

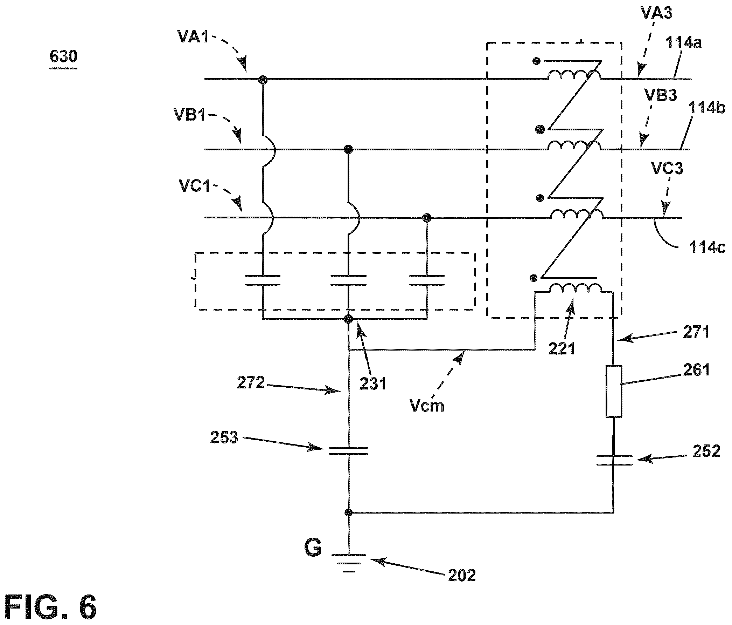

FIG. 6 depicts another non-limiting aspect of the CMVC circuit 630. The CMVC circuit 630 of FIG. 6 is similar to the CMVC circuit 430 of FIG. 4, so like parts are labeled with like reference numbers. One notable difference between the CMVC circuit 630 of FIG. 6 and the CMVC circuit 430 of FIG. 4 is that while the CMVC circuit 630 of FIG. 6 includes the second branch 272 between the first node 231 and electrical ground 202, and in parallel with the first branch 271, the second branch 272 can include a third capacitor 253 in lieu of the second resistor 262. The third capacitor 253 can be electrically coupled between the first node 231 and the electrical ground 202, and electrically in parallel with the primary winding 221, the first resistor 261, and the second capacitor 252. In other non-limiting aspects, the third capacitor 253 can be arranged electrically in series with the second resistor 262 (FIG. 4), or the third inductor 223 (FIG. 5), or both, without departing from the scope of the disclosure herein. In operation, a capacitance value (e.g., in microfarads) of the third capacitor 253 in the second branch 272 can be selected can avoid core saturation of the coupled inductor 220, by absorbing the low frequency common-mode component of the phase voltage VA1, VB1, VC1. In this way, smaller and less costly inductors can be implemented for the coupled inductor 220.

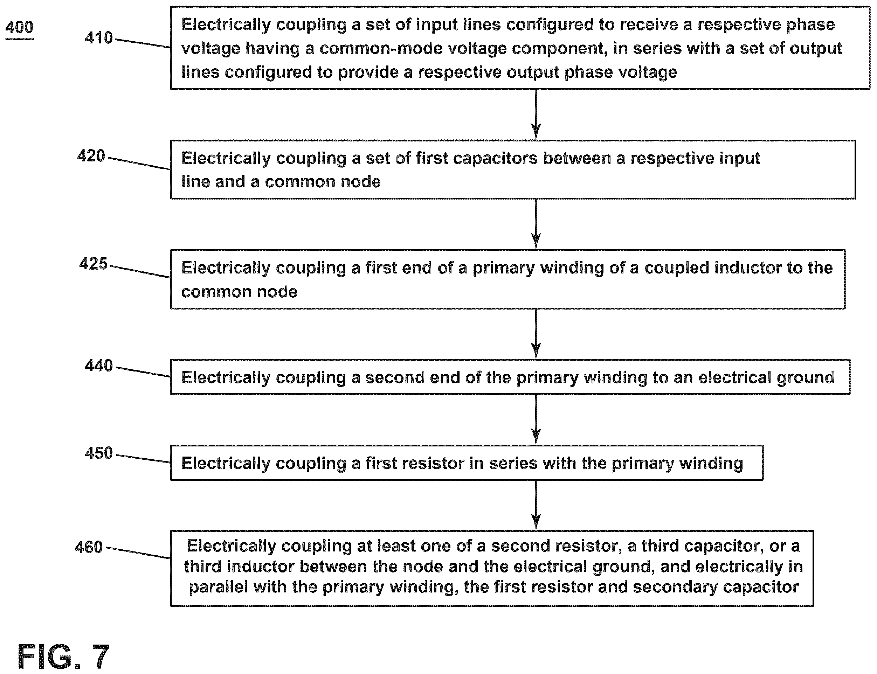

FIG. 7 illustrates a flow chart demonstrating a method 400 of forming a CMVC circuit 230-630. While the method 400 is described herein, for ease of understanding, in terms of the CMVC circuit 230-630, of FIGS. 2-6, other aspects are not so limited and the method 400 can be implemented with any CMVC circuit without departing from the scope of the disclosure.

The method 400 can begin at 410 by electrically coupling a set of input lines 113a, 113b, 113c configured to receive a respective first phase voltage VA1, VB1, VC1, having a common-mode voltage component Vcm, in series with a set of output lines 114a, 114b, 114c configured to provide a respective output phase voltage VA3, VB3, VC3. In non-limiting aspects the first phase voltage VA1, VB1, VC1 and the output phase voltage are polyphase AC voltages. In non-limiting aspects, AC voltage VA3, VB3, VC3 can each comprise a polyphase voltage (e.g., three-phase AC voltage).

The method 400 can include at 420, electrically coupling a set of first capacitors 250a, 250b, 250c between a respective input line 113a, 113b, 113c and a first node 231. For example, a respective first capacitor 250a can be electrically coupled at a second node 232 to the first input line 113a, and electrically in series between the first input line 113a and the first node 231, another respective first capacitor 250b can be electrically coupled at a third node 233 to the second input line 113b, and in series between the second input line 113b and the first node 231, and another first capacitor 250c can be electrically coupled at a fourth node 234 to the third input line 113c, and in series between the third input line 113c and the first node 231.

The method 400 can include, at 425, electrically coupling a first resistor 261 and a primary winding 221 of a coupled inductor 220 electrically in series between the first node 231 and an electrical ground 202. The coupled inductor 220 can include the primary winding 221 and at least one secondary winding, such as a first secondary winding 222a, a second secondary winding 222b, and a third secondary winding 222c. In non-limiting aspects that the primary winding 221 and the at least one secondary winding 222a, 222b, 222c can be wound on a common magnetic core 226 to define the coupled inductor 220. In non-limiting aspects, the primary winding 221 and the at least one secondary winding 222a, 222b, 222c of the coupled inductor 220 are wound having a polarity in phase with each other. In some non-limiting aspects, a turns ratio of the primary winding 221 with respect to each respective at least one secondary winding 222a, 222b, 222c is substantially equal to 1:1. It is contemplated that in some aspects, the CMVC circuit 230-630 can be a polyphase AC circuit having a number of electrical phases, and wherein the at least one secondary winding 222a, 222b, 222c comprises at least N secondary windings, wherein N is equal to the number of electrical phases in the CMVC circuit 230-630.

In non-limiting aspects, each respective first capacitor 250a, 250b, 250c, the primary winding 221 and the first resistor 261 can be arranged to define a respective series resonant circuit with substantially zero reactance (e.g., having no opposition to AC current flow) at a resonant frequency of the first phase voltage VA1, VB1, VC1. For example, the first series resonant circuit 241 can extend in series from the first input line 113a at the second node 232 to the respective first capacitor 250a to the first node 231 to the primary winding 221, to the first resistor 261, and to the electrical ground 202. The second series resonant circuit 242 can extend in series from the second input line 113b at the third node 233 to the respective first capacitor 250b to the first node 231 to the primary winding 221, to the first resistor 261, and to the electrical ground 202. The third series resonant circuit 243 can extend in series from the third input line 113c at the fourth node 234 to the respective first capacitor 250c to the first node 231 to the primary winding 221, to the first resistor 261, and to the electrical ground 202. As such, while each of the first second, and third series resonant circuits 241, 242, 243 include a respective first capacitor 250a, 250b, 250c, they can each share a common inductor, namely the primary winding 221 and a common resistor, namely the first resistor 261.

The method 400 can include, at 440, electrically coupling at least one secondary winding 222a, 222b, 222c of the coupled inductor 220 in series between a respective input line 113a, 113b, 113c and a respective output line 114a, 114b, 114c.

In non-limiting aspects, the method 400 can further include, at 450, electrically coupling a second capacitor 252 in series with the primary winding 221 and the first resistor 261.

In non-limiting aspects, the method 400 can further include, at 460, electrically coupling one of a second resistor 262 or a third inductor 223, or a third capacitor 253, or combinations thereof, between the first node 231 and the electrical ground 202, and electrically in parallel with the primary winding 221, the first resistor 261, and the second capacitor 252.

The sequences depicted are for illustrative purposes only and is not meant to limit the method 400 in any way as it is understood that the portions of the method 400 can proceed in a different logical order, additional or intervening portions can be included, or described portions of the method 400 can be divided into multiple portions, or described portions of the method 400 can be omitted without detracting from the described method.

The aspects disclosed herein provide a common-mode voltage cancellation or reduction circuit and method of forming. The technical effect is that the aspects described herein can enable the cancellation or reduction of the common-mode voltage in an electrical power supply system. Another advantage that can be realized in the aspects described herein is that the aspects enable the use of smaller, lighter, and less expensive LC filters compared with conventional systems. For example, aspects as described herein provide a common-mode voltage cancellation circuit that beneficially employs a simple coupled inductor having a single primary winding with at least one secondary winding to beneficially reduce the size and cost of the inductive filter elements, and to simplify the fabrication of the inductor portion of the filter. In some aspects, the common-mode voltage cancellation circuit can further include a capacitor to filter out a fundamental frequency component, and to improve noise attenuation even further.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

To the extent not already described, the different features and structures of the various aspects can be used in combination with each other. That one feature cannot be illustrated in all of the aspects is not meant to be construed that it cannot be, but is done for brevity of description. Thus, the various features of the different aspects can be mixed and matched to form new aspects, whether or not the new aspects are expressly described. Combinations or permutations of features described herein are covered by this disclosure.

Further aspects are provided by the subject matter of the following clauses:
A common-mode voltage cancellation (CMVC) circuit, comprising: a set of input lines configured to receive a respective input phase voltage, each respective phase voltage including a common-mode voltage component; a set of output lines configured to provide a respective output phase voltage; a set of first capacitors electrically coupled at a respective first end to a respective input line of the set of input lines and electrically coupled together at a respective second end to define a node; and a coupled inductor, having a primary winding and at least one secondary winding, the at least one secondary winding electrically coupled in series between a respective input line of the set of input lines and a respective output line of the set of output lines; and a first resistor, wherein the first resistor and the primary winding are electrically coupled in series between the node and an electrical ground.

The CMVC circuit of any preceding clause, wherein the primary winding and the at least one secondary winding of the coupled inductor are wound having a relative polarity and are in-phase with each other.

The CMVC circuit of any preceding clause, wherein a turns ratio of the primary winding with respect to each respective at least one secondary winding is equal to 1:1.

The CMVC circuit of any preceding clause, wherein a voltage induced across each at least one secondary winding includes a common-mode voltage component proportional to a common-mode voltage component of the respective input phase voltage.

The CMVC circuit of any preceding clause, wherein the CMVC circuit is a polyphase AC circuit, wherein the at least one secondary winding comprises at least N secondary windings, and wherein N is equal to a number of electrical phases in the polyphase AC circuit.

The CMVC circuit of any preceding clause, wherein each respective first capacitor, the primary winding, and the first resistor are arranged to define a respective series resonant circuit.

The CMVC circuit of any preceding clause, wherein the respective series resonant circuit has substantially zero reactance at a resonant frequency of the input phase voltage.

The CMVC circuit of any preceding clause, further comprising a second capacitor electrically coupled in series with the primary winding and the first resistor.

The CMVC circuit of any preceding clause, further comprising a second resistor electrically coupled between the node and the electrical ground, and electrically in parallel with the primary winding, the first resistor and the second capacitor.

The CMVC circuit of any preceding clause, further comprising a second inductor electrically coupled in series between the node and the electrical ground, and electrically in parallel with the primary winding, the first resistor, and the second capacitor.

The CMVC circuit of any preceding clause, further comprising a third capacitor electrically coupled in series between the node and the electrical ground, and electrically in parallel with the primary winding, the first resistor, and the second capacitor.

A method of forming a CMVC circuit, the method comprising: electrically coupling a set of input lines configured to receive a respective input phase voltage, having a common-mode voltage component, electrically in series with a set of output lines configured to provide a respective output phase voltage; electrically coupling a set of first capacitors together at a respective second end to define a node, and at a respective first end to a respective input line of the set of input lines ; electrically coupling a first resistor and a primary winding of a coupled inductor electrically in series between the node and an electrical ground; and electrically coupling at least one secondary winding of the coupled inductor in series between a respective input line of the set of input lines and a respective output line of the set of output lines.

The method of any preceding clause, wherein the primary winding and the at least one secondary winding of the coupled inductor are wound having a polarity in phase with each other.

The method of any preceding clause, wherein the CMVC circuit is a polyphase AC circuit, wherein the at least one secondary winding comprises at least N secondary windings, and wherein N is equal to a number of electrical phases in the polyphase AC circuit.

The method of any preceding clause, wherein each respective first capacitor, the primary winding and the first resistor are arranged to define a respective series resonant circuit.

The method of any preceding clause, wherein the respective series resonant circuit has substantially zero reactance at a resonant frequency of the input phase voltage.

The method of any preceding clause, further comprising electrically coupling a second capacitor in series with the primary winding and the first resistor.

The method of any preceding clause, further comprising electrically coupling a second resistor electrically in series between the node and the electrical ground, and electrically in parallel with the primary winding, the first resistor and the second capacitor.

The method of any preceding clause, further comprising electrically coupling a second inductor and a third capacitor electrically in series between the node and the electrical ground, and electrically in parallel with the primary winding, the first resistor, and the second capacitor.

The method of any preceding clause, further comprising electrically coupling a third capacitor electrically in series between the node and the electrical ground, and electrically in parallel with the primary winding, the first resistor, and the second capacitor.

## Claims

1. A common-mode voltage cancellation (CMVC) circuit (130), (230), (330), (430), (530), (630), comprising:
a set of input line (113)s (113) configured to receive a respective input phase voltage (VA1), (VB1), (VC1), each respective phase voltage including a common-mode voltage component (Vcm);
a set of output lines (114) configured to provide a respective output phase voltage (VA3), (VB3), (VC3);
a set of first capacitors (250) electrically coupled between a respective input line (113) and a node (231); and
a coupled inductor (220), having a primary winding (221) and at least one secondary winding (222a), (222b), (222c), the at least one secondary winding (222a), (222b), (222c) electrically coupled in series between a respective input line (113) and a respective output line (114); and
a first resistor (261), wherein the first resistor (261) and the primary winding (221) are electrically coupled in series between the node (231) and an electrical ground (202).

2. The CMVC circuit (130), (230), (330), (430), (530), (630) of claim 1, wherein a second phase voltage (VA2), (VB2), (VC2) induced across each at least one secondary winding (222a), (222b), (222c) includes a common-mode voltage component (Vcm) proportional to a common-mode voltage component (Vcm) of the respective input phase voltage (VA1), (VB1), (VC1).

3. The CMVC circuit (130), (230), (330), (430), (530), (630) of any of claims 1-2, wherein the CMVC circuit (130), (230), (330), (430), (530), (630) is a polyphase AC circuit having a number of electrical phases, and wherein the at least one secondary winding (222a), (222b), (222c) comprises at least N secondary windings (222a), (222b), (222c), wherein N is equal to the number of electrical phases in the CMVC circuit (130), (230), (330), (430), (530), (630).

4. The CMVC circuit (130), (230), (330), (430), (530), (630) of any of claims 1-3, wherein each respective first capacitor (250a), (250b), (250c), the primary winding (221) and the first resistor (261) are arranged to define a respective series resonant circuit (241), (242), (243) with substantially zero reactance at a resonant frequency of the input phase voltage (VA1), (VB1), (VC1).

5. The CMVC of any preceding claim, further comprising a second capacitor (252) electrically coupled in series with the primary winding (221) and the first resistor (261).

6. The CMVC of claim 5, further comprising a second resistor (262) electrically coupled between the node (231) and the electrical ground (202), and electrically in parallel with the primary winding (221), the first resistor (261) and the second capacitor (252).

7. The CMVC of any of claims 5-6, further comprising a third inductor (223) electrically coupled between the node (231) and the electrical ground (202), and electrically in parallel with the primary winding (221), the first resistor (261) and the second capacitor (252).

8. The CMVC of any of claims 5-7, further comprising a third capacitor (253) electrically coupled between the node (231) and the electrical ground (202), and electrically in parallel with the primary winding (221), the first resistor (261) and the second capacitor (252).

9. A method of forming a CMVC circuit (130), (230), (330), (430), (530), (630), comprising
electrically coupling a set of input lines (113) configured to receive a respective input phase voltage (VA1), (VB1), (VC1), having a common-mode voltage component (Vem), in series with a set of output lines (114) configured to provide a respective output phase voltage (VA3), (VB3), (VC3);
electrically coupling a set of first capacitors (250) between a respective input line (113) and a node (231);
electrically coupling a first resistor (261) and a primary winding (221) of a coupled inductor (220) electrically in series between the node (231) and an electrical ground (202); and
electrically coupling at least one secondary winding (222a), (222b), (222c) of the coupled inductor (220) in series between a respective input line (113) and a respective output line (114).

10. The method of claim 9, wherein the CMVC circuit (130), (230), (330), (430), (530), (630) is a polyphase AC circuit having a number of electrical phases, and wherein the at least one secondary winding (222a), (222b), (222c) comprises at least N secondary winding (222a), (222b), (222c)s, wherein N is equal to the number of electrical phases in the CMVC circuit (130), (230), (330), (430), (530), (630).

11. The method of any of claims 9-10, wherein each respective first capacitor (250a), (250b), (250c), the primary winding (221) and the first resistor (261) are arranged to define a respective series resonant circuit (241), (242), (243) with substantially zero reactance at a resonant frequency of the input phase voltage (VA1), (VB1), (VC1).

12. The method of any of claims 9-11, further comprising electrically coupling a second capacitor (252) in series with the primary winding (221) and the first resistor (261).

13. The method of claim 12, further comprising electrically coupling a second resistor (262) electrically between the node (231) and the electrical ground (202), and electrically in parallel with the primary winding (221), the first resistor (261) and the second capacitor (252).

14. The method of any of claims 12-13, further comprising electrically coupling a third inductor (223) electrically between the node (231) and the electrical ground (202), and electrically in parallel with the primary winding (221), the first resistor (261) and the second capacitor (252).

15. The method of any of claims 12-14, further comprising electrically coupling a third capacitor (253) between the node (231) and the electrical ground (202), and electrically in parallel with the primary winding (221), the first resistor (261), and the second capacitor (252).
